# EUROPÄISCHE PATENTANMELDUNG

(11) **EP 0 937 693 A1**
(43) Veröffentlichungstag der Anmeldung: **25.08.1999**
(21) Anmeldenummer: 99103281.4
(22) Anmeldetag: 19.02.1999
(51) Int. Cl.: C04B 35/593, C04B 35/5831, B23B 27/14

(54) **Verbundwerkstoff aus Siliziumnitrid und kubischem Bornitrid**

(30) Priorität: 19.02.1998 DE 19806860
(71) Anmelder: CeramTec AG Innovative Ceramic Engineering, 73207 Plochingen (DE)
(72) Erfinder: Nagel, Alwin Dr., 73257 Köngen (DE); Friederich, Kilian Dr., 73207 Plochingen (DE); Häussermann, Conrad, 70563 Stuttgart (DE)
(74) Vertreter: Uppena, Franz, Dr.

(57) **Zusammenfassung**

Die vorliegende Erfindung beschreibt Verbundwerkstoffe, die Siliziumnitrid und kubisches Bornitrid enthalten, wobei sie bis zu 50 Gew.-% kubisches Bornitrid und bis zu 10 Vol.-%, vorzugsweise 1,3 bis 4 Vol.-% mindestens eines Sinterhilfsmittels enthalten und eine theoretische Dichte von mehr als 97 % aufweisen.

## Beschreibung

Gegenstand der vorliegenden Erfindung ist ein Verbundwerkstoff, der kubisches Bornitrid und mindestens ein Sinterhilfsmittel enthält und der eine theoretische Dichte von mehr als 97 % aufweist Verfahren zu dessen Herstellung sowie dessen Verwendung.

Für viele Einsatzfälle reicht die Härte von Siliziumnitridkeramiken nicht aus. Werden Siliziumnitridkeramiken beispielsweise als Schneidwerkstoffe eingesetzt, so kommt es häufig zu Kantenverrundungen. Es hat nicht an Versuchen gefehlt, diese Nachteile der Siliziumnitridkeramiken durch Zumischung anderer Komponenten zu beseitigen. Eine Komponente, die als besonders hart bekannt ist, ist das kubische Bornitrid (cBN). cBN weist nach dem Diamanten die höchste Härte auf. Nachteilig an cBN ist jedoch dessen Sprödigkeit und ein technisch sehr aufwendiges Herstellverfahren für cBN-Keramiken. Außerdem ist cBN thermisch nicht stabil und wandelt sich beim Sintern in das sehr weiche hexagonale Bornitrid um.

Kombinationen von Siliziumnitrid und Bornitrid (BN) sind im Stand der Technik bereits bekannt. So beschreibt die DE-A 44 35 182 ein BN-enthaltendes Si₃N₄. Hierbei handelt es sich um hexagonales und damit weiches BN, das während des Sinterns gebildet wird.

Die JP-A 09184030 beschreibt ein Schneidwerkzeug aus cBN, Al₂O₃, Al und SiC. Siliziumnitridkeramiken mit cBN werden nicht beschrieben. Bei der Herstellung der Keramiken muß besonders auf niedrige Sintertemperaturen geachtet werden. Beschrieben werden Sintertemperaturen von 1000 bis 1500°C. Nur dadurch soll es gelingen, cBN stabil zu halten.

Die JP-A 239277 beschreibt keramische Schneidwerkstoffe, die in unterschiedlichen Matrixwerkstoffen BN enthalten. Neben beispielsweise Al₂O₃ als Matrixwerkstoff wird auch Siliziumnitrid verwendet. Die dabei eingesetzten Verfahrensbedingungen - axiales Heißpressen bei Temperaturen von 1700 bis 1780°C - lassen jedoch erwarten, daß sich kubisches Bornitrid in hexagonales Bornitrid umwandelt; Angaben hierüber fehlen. Der Einsatz relativ hoher Gehalte an Sinterhilfsmitteln läßt darüber hinaus aber auch keine guten Hochtemperatureigenschaften (Festigkeit, Verschleißwiderstand) erwarten. Ferner weisen die Werkstoffe Granulate, also Inhomogenitäten im Gefüge auf. Es ist bekannt, daß solche Inhomogenitäten die Bruchzähigkeit und die Festigkeit von spröden Werkstoffen beeinträchtigen.

In der EP-A 0 715 930 werden Verbundwerkstoffe aus Siliziumnitrid und cBN beschrieben. Diese Keramiken werden aus extrem feinem Siliziumnitridpulver im Nano-Bereich (maximale Sinteraktivität, geringe Sintertemperaturen!) mit cBN-Pulver hergestellt. Die extreme Pulverfeinheit führt zu einer so hohen Sinteraktivität, daß 1500°C zur Verdichtung ausreichen. Dabei wird ein Gasdruck von 2000 bar oder ein mechanischer Druck (axial) von 300 bar eingehalten. In der Praxis ist die Verwendung von Nano-Pulvern zur Herstellung von Sinterkörpern jedoch immer mit Riesenkornwachstum beim Sintern verbunden, was zur deutlichen Verschlechterung der mechanischen Eigenschaften führt (V. Richter et al., in "Hartstoffe, Hartstoffschichten, Werkzeuge, Verschleißschutz", Pulvermetallurgie in Wissenschaft und Praxis, Band 13; Hrsg. R. Ruthard, Werkstoff-Informations-gesellschaft (1997), S. 29 ff.; W. D. Schubert et al., 13. Planseeseminar, Reutte 1993, Bd. 4 S. 283 ff.; V. Richter et al., Vortrag Europ. Conference on Adv. in Hard Mat. Production EURO PM '96, Stockholm (S), 1996, Proceedings, S. 117 ff.; M. Seagopaul, HM 18, 14. Planseeseminar, Reutte (1997); K. Hayashi, HM 63, ibid.; R. Porat et al., ibid., Bd. 2, S. 183 ff.; H. Suziki et al., J. Jap. Soc. Powder & Powder Met. 19 (1972), S. 106 ff.). Angaben über die Dichte und die Härte der Keramiken fehlen.

Eine Aufgabe der vorliegenden Erfindung war daher, einen Werkstoff bereitzustellen, der die positiven Eigenschaften des Siliziumnitrids mit denen des kubischen Bornitrids vereinigt und mit vertretbarem Aufwand hergestellt werden kann.

Gelöst wurde diese Aufgabe erfindungsgemäß durch einen Verbundwerkstoff aus Siliziumnitrid mit den Kennzeichen des Hauptanspruchs. Vorzugsweise Ausgestaltungen sind in den Unteransprüchen charakterisiert.

Erfindungsgemäß ist vorgesehen, das Siliziumnitridpulver mit den Sinterhilfsmitteln und dem kubischem Bornitrid (cBN) intensiv zu mahlen und zu mischen.

Das einzusetzende Siliziumnitridpulver weist eine spezifische Oberfläche von > 5 m²/g, vorzugsweise von > 8 m²/g, besonders bevorzugt von > 12 m²/g mit kationischen Verunreinigungen (ohne Fe und Al) von < 0,2 Vol.-% und einem Sauerstoffgehalt von < 1,5 % auf.

Die Menge an eingesetztem cBN kann in den Grenzen von 0,5 Gew.-% bis 50 Gew.-% variiert werden. Vorzugsweise werden bis zu 15 Gew.-% eingesetzt.

Als Sinterhilfsmittel werden neben beispielsweise Al₂O₃ und MgO vorzugsweise hochschmelzende Oxide der Seltenerdmetalle eingesetzt. Als Seltenerdmetall wird mindestens eins der Elemente der Lanthanoidengruppe, Scandium und/oder Yttrium eingesetzt. Vorzugsweise wird als Sinterhilfsmittel Er₂O₃, Gd₂O₃, Nd₂O₃, Sc₂O₃, Sm₂O₃, Y₂O₃ und/oder Yb₂O₃, besonders bevorzugt wird eine Mischung von mindestens zwei dieser Oxide oder auch von Al₂O₃ mit einem dieser Oxide verwendet. Beispielhaft genannt seien binäre Mischungen aus Al₂O₃ und Y₂O₃, Yb₂O₃ und Y₂O₃, ternäre Mischungen aus Y₂O₃, Yb₂O₃ und Er₂O₃ oder auch quaternäre Mischungen aus Y₂O₃, Sm₂O₃, Gd₂O₃ und Nd₂O₃. Diesen Sinterhilfsmitteln können auch noch weitere, an sich als Sinterhilfsmittel verwendete Oxide, beispielsweise Fe₂O₃ und/oder HfO₂, zugemischt werden. Dabei können bis zu 1 Gew.-% Fe₂O₃ und/oder bis zu 5 Gew.-% HfO₂ eingesetzt werden. Der Gehalt an Sinterhilfsmittel beträgt, bezogen auf das Gesamtvolumen, maximal 10 Vol%, vorzugsweise 1,3 bis 4 Vol%, wobei die einzelnen Oxide in Mengen von ≥ 0,1 Vol.-% eingesetzt werden können.

Neben den Hauptbestandteilen Siliziumnitrid, cBN und Sinterhilfsmittel können die erfindungsgemäßen Verbundwerkstoffe bis zu 0,1 Gew.-% Verunreinigungen enthalten. Als Verunreinigungen gelten beispielsweise andere Seltenerdmetall-Oxide, metallische Verunreinigungen wie Fe, Co und/oder Cr, Oxide der Elemente Ca und/oder Mg und/oder die Halogenide der Elemente Na und/oder K.

Die Seltenerdmetall-Oxide bilden im gesinterten Körper mit dem auf der Siliziumnitridpulveroberfläche haftenden Siliziumdioxid eine intergranulare Phase. Dabei kann die hohe thermische und chemische Stabilität der Seltenerdmetall-Oxide verantwortlich für die ausgezeichnete Leistungsfähigkeit im Einsatz als keramisches Bauteil, zum Beispiel als Schneidkeramik bei der Graugußbearbeitung, gemacht werden. Die Temperaturleitfähigkeit, die Warmhärte und die Verschleißfestigkeit sind in den erfindungsgemäßen hochdichten Siliziumnitridkeramiken wesentlich verbessert.

Die eingesetzten Komponenten weisen vorzugsweise mittlere Korngrößen d₅₀ von < 5 µm und eine Reinheit von > 99 % auf. Nach der Herstellung eines Mahlschlickers und Zugabe von organischen Verbindungen, sogenannten Verflüssigern, wird in einer Kugelmühle das Sintervermögen durch Erhöhung der spezifischen Oberfläche verstärkt. Als Suspensionsmittel werden beispielsweise Wasser, organische Lösungsmittel wie Methanol, Ethanol, Isopropanol, Oktanol, Aceton und/oder Hexan, vorzugsweise Wasser, Isopropanol, Aceton und/oder Hexan, als Verflüssiger Carboxylsäuren und/oder Tetramethylammoniumhydroxid eingesetzt. Gemahlen wird vorzugsweise in einer Rührwerkskugelmühle mit Si₃N₄-Mahlkugeln. Die effektive Mahldauer richtet sich nach den eingesetzten Rohstoffen und beträgt üblicherweise 1 bis 4 Stunden. Eine Vergrößerung der spezifischen Oberfläche auf 12 bis 20 m²/g ist erfindungsgemäß bevorzugt.

Nachdem dieser Mischung dann an sich bekannte organische Bindemittel zugegeben wurden, wird sie getrocknet und granuliert.

Die Weiterverarbeitung des Mahlschlickers kann dabei nach dem Sprühtrocknungs- oder dem Gefriertrocknungsverfahren erfolgen. Der Mahlschlicker wird nach der Zugabe von organischen Bindemitteln, je nach Suspensionsmittel beispielsweise PVA, PEG, Wachse und/oder Polyacrylate, getrocknet, granuliert und trocken zu Grünteilen gewünschter Dimension verpreßt. Je nach eingesetztem Rohstoff und Binder beträgt der Preßdruck 1200 bis 2500 bar.

Nach Entfernen des organischen Binders werden die Formkörper durch geeignete Verfahren bis auf eine Enddichte von > 97 % gesintert.

Druckloses Sintern bei Temperaturen bis ca. 1600°C führt im allgemeinen zu einer Dichte von etwa 85 %. Diese Dichte reicht normalerweise nicht aus, um durch eine Gasdrucksinterstufe oder "Nach-HIPen" zur vollständigen Verdichtung zu kommen. Hierzu sind Ausgangs-Dichtewerte von >94% erforderlich. Unterhalb dieses Wertes sind die allermeisten Poren im Sinterkörper noch durch Kanäle untereinander und mit der Atmosphäre an der Oberfläche verbunden, so daß sich in den Poren der gleiche Druck wie außen einstellt und kein zusätzlicher Verdichtungseffekt eintritt.

Der gewünschte Verdichtungseffekt läßt sich beispielsweise erzielen, wenn die Oberfläche abgedichtet wird. Damit werden gleichzeitig auch die nach innen führenden Porenkanäle abgedichtet. Dies kann beispielsweise durch einen gasundurchlässigen Glasfilm erreicht werden. Ein solches Verfahren ist unter dem Begriff Kapsel-HIP an sich bekannt. Es wurde jedoch zur Herstellung eines Verbundwerkstoffes aus Siliziumnitrid und kubischem Bornitrid (cBN) noch nicht eingesetzt.

Die Dicht-Sinterung der erfindungsgemäß zusammengesetzten ausgeheizten Grünteile wird vorzugsweise mit dem Kapsel-Hip-Prozeß erreicht .

Als Glaswerkstoff zum Einkapseln wird ein geeignetes Glaspulver verwendet. Geeignet ist beispielsweise eine pulverförmige Mischung aus Vycor-Glas (96,7 % SiO₂, 2,9 % Br₂O₃ und 0,4 % Al₂O₃), Pyrex-Glas (80 % SiO₂, 12 % B₂O₃, 3 % Al₂O₃, 4 % Na₂O, 0,5 % K₂O, 0,3 % CaO), und/oder Borsilikatglas mit 2 bis 6 % B₂O₃, < 1 % Na₂O und 2 % Al₂O₃. Gläser, die im Hinblick auf die Benetzung des Siliziumnitrids durch den Gehalt an Na₂O und K₂O optimiert wurden und die in der US-A-5,503,926 beschrieben sind und Gläser, die im Hinblick auf den thermischen Ausdehnungskoeffizienten an Siliziumnitrid durch Zugabe von Al₂O₃-Pulver angepaßt sind, sind ebenfalls einsetzbar.

Das Glaspulver wird in dünner Schicht in einen mit (hexagonalem) Bornitrid als Trennmittel belegten Grafittiegel eingebracht. Auf diese erste dünne Schicht Glaspulver wird eine Lage der Grünteile gelegt. Diese wird mit dem Glaspulver so überschichtet, daß die Oberkante der Grünteile wiederum mit einer dünnen Glaspulverschicht belegt ist.

Zum Sintern wird der gefüllte Tiegel in eine heißisostatische Presse (HIP) gestellt, wo unter gleichzeitiger Einwirkung von Temperatur und allseitigem Gasdruck der Verdichtungsvorgang abläuft. Zunächst wird das Restgas aus den Poren des Grünkörpers und der Glaspulverschüttung entfernt. Beim anschließenden Aufheizen schmilzt das Glas und bildet einen gasdichten Film auf der Oberfläche jedes einzelnen Grünteils. Dieser Aufschmelzvorgang findet noch unter Vakuum statt, damit die Poren der Grünteile keine Gasreste enthalten, die den Verdichtungsvorgang behindern würden.

Nachdem ein dichter kontinuierlicher Glasfilm entstanden ist, wird der Gasdruck erhöht. Danach wird weiter aufgeheizt. Durch die thermische Expansion des Gases steigt der Druck an, während die Temperatur etwa 1550°C erreicht. Durch eine angemessene Haltezeit werden die Formkörper vollständig verdichtet.

Nach dem Abkühlen werden die einzelnen Formkörper von der anhaftenden Glasschicht, beispielsweise durch Sandstrahlen, befreit und der weiteren Bearbeitung zugeführt.

Die Formkörper werden beispielsweise durch Läppen, Schleifen, und Fasen endbehandelt.

Die Eigenschaftsverbesserungen der erfindungsgemäßen Verbundwerkstoffe gegenüber dem Stand der Technik wird durch die Härtewerte verdeutlicht:

Der Vergleichswerkstoff, der aus dem Matrixwerkstoff ohne cBN-Anteil mittels Gasdrucksintern bei 100 bar Stickstoffdruck hergestellt wurde, weist eine Vikkershärte (HV10) von 1550 auf. Wird dieser Matrixwerkstoff (ohne cBN-Anteil) nach dem Kapsel-HIP-Verfahren verdichtet, so wird ein deutlich feinkörnigeres Gefüge erhalten. Ein so hergestellter Werkstoff weist aufgrund der Feinkörnigkeit eine deutlich höhere Vickershärte (HV10) von 1700 auf.

Eine nochmals höhere Vickershärte (HV10) weisen die erfindungsgemäßen Verbundwerkstoffen auf. Die HV10 Werte der erfindungsgemäßen Verbundwerkstoffe liegen überraschenderweise höher als 1800.

Die erfindungsgemäßen Verbundwerkstoffe können als Schneidkeramiken, beispielsweise für die Zerspanung von Eisengußwerkstoffen oder auch als Substrat für Beschichtungen eingesetzt werden.

Die nachfolgenden Beispiele sollen die Erfindung erläutern ohne sie einzuschränken.

### Vergleichsbeispiel 1 (V 1):

Versatz: 98,5% Si₃N₄ mit 1% Y₂O₃, 0,5% MgO (Sinteradditiv), 10 Gew.-% cBN (bezogen auf die Gesamtmischung)

Der Versatz wurde bei Tₘₐₓ von 1780°C, 1 bar Stickstoff drucklos gesintert. Die Dichte des Werkstoffes betrug 2.58 g/cm³ (80% der Theorie). Im Röntgenbeugungsdiagramm konnte kein kubisches Bornitrid nachgewiesen werden. Wegen der hohen Sintertemperatur hatte sich das kubische Bornitrid in die hexagonale Modifikation umgewandelt ("grafitisiert").

### Vergleichsbeispiel 2 (V 2):

Versatz: 98,5% Si₃N₄ mit 1% Y₂O₃, 0,5% MgO (Sinteradditiv), 10 Gew.-% cBN (bezogen auf die Gesamtmischung)

Der Versatz wurde bei Tₘₐₓ von 1590°C, 10 bar Stickstoff drucklos gesintert. Die Dichte des Werkstoffes betrug 2,76 g/cm³ (85% der Theorie). Die kubische Phase des Bornitrids ist im Röntgenbeugungsdiagramm eindeutig zu erkennen.

### Beispiele:

Bei den nachfolgenden Beispielen wurden die in der Tabelle 1 angegebenen Versätze eingesetzt. Eine Mischung aus Siliziumnitridpulver (spezifische Oberfläche von 12 m²/g, Sauerstoffgehalt 1,3 %), Sinterhilfsmitteln und Pulver aus kubischem Bornitrid (cBN) wird in einer Attritormühle in wässriger Suspension 2 h lang gemahlen und gemischt. Nach der Mahlung werden 2 % organischer Binder (1:1-Mischung aus Polyvinylalkohol (PVA Mowiol GE 04/86) und Polyethylenglykol (PEG 400)) zugegeben. Die binderhaltige Suspension wird in einem Sprühtrockner getrocknet und granuliert; die mittlere Granulatgröße beträgt 80 µm. Das entstehende Granulat wird durch axiales Pressen mit einem Preßdruck von 2000 bar zu Prüfkörpern geformt. Vor dem Sintern wird durch eine separate Wärmebehandlung der zur Formgebung erforderliche organische Binder ausgeheizt. Der Restkohlenstoffgehalt im Grünteil beträgt nach dem Ausheizen < 0,1 %. Die Sinterung der ausgeheizten Grünteile erfolgt nach dem Kapsel-Hip-Prozeß.

Als Glaswerkstoff zum Einkapseln wird eine pulverförmige Mischung aus Vycor-Glas verwendet. In einem mit (hexagonalem) Bornitrid als Trennmittel belegtem Grafittiegel wird auf eine erste dünne Schicht Glaspulver eine Lage der Grünteile gelegt. Diese wird mit dem Glaspulver so überschichtet, daß die Oberkante der Grünteile wiederum mit einer dünnen Glaspulverschicht belegt ist. Hierauf wird die nächste Lage Grünteile gestapelt, die wiederum mit einer dünnen Glasschicht überschichtet wird. Dieser Aufbau wird so lange fortgesetzt, bis der Tiegel gefüllt ist.

Zum Sintern wird der gefüllte Tiegel in eine heißisostatische Presse (HIP) gestellt, wo unter gleichzeitiger Einwirkung von Temperatur und allseitigem Gasdruck der Verdichtungsvorgang abläuft. Zuerst wird das Ofenvolumen evakuiert. Dabei entweicht aus den Poren des Grünkörpers und der Glaspulverschüttung das Restgas. Beim Aufheizen schmilzt das Glas bei ca. 1200°C und bildet einen gasdichten Film auf der Oberfläche jedes einzelnen Grünteils. Dieser Aufschmelzvorgang findet noch unter Vakuum statt, damit die Poren der Grünteile keine Gasreste enthalten, die den Verdichtungsvorgang behindern würden.

Nachdem ein dichter kontinuierlicher Glasfilm entstanden ist (nach 1 h Haltezeit bei 1200°C) wird der Gasdruck (Ar) auf 1000 bar erhöht. Danach wird weiter aufgeheizt. Durch die thermische Expansion des Gases steigt der Druck auf ca. 1250 bar an, während die Temperatur 1550°C erreicht. Die Haltezeit beträgt hierbei 90 Minuten. Währenddessen verdichten die Prüfkörper vollständig.

Nach dem Abkühlen werden die einzelnen Prüfkörper durch Sandstrahlen von der anhaftenden Glasschicht befreit und der weiteren Bearbeitung zugeführt.

Aus den Prüfkörpern werden durch Läppen, Schleifen, und Fasen Schneidplatten hergestellt, die Verschleißtests unterzogen werden.

Die Eigenschaftsverbesserungen gegenüber dem Stand der Technik wird durch die Härtewerte verdeutlicht:

Der Matrixwerkstoff, der ohne cBN-Anteil mittels Gasdrucksintern bei 100 bar Stickstoffdruck hergestellt wurde, weist eine Vickershärte (HV10) von 1550 auf (V3). Wird dieser Matrixwerkstoff (ohne cBN-Anteil) nach dem Kapsel-HIP-Verfahren verdichtet, so wird ein deutlich feinkörnigeres Gefüge eingestellt; dieser Werkstoff weist aufgrund der Feinkörnigkeit einen höheren Härtewert von 1700 auf (V4). Die erfindungsgemäßen Verbundwerkstoffe mit cBN und durch Kapsel-HIP verdichtet zeigen eine weitere Härtesteigerung (Beispiele 1 bis 8).

**Tabelle 1:**

| **Beispiel Nr.:** | **Al**_{**2**}**O**_{**3**} **[Gew.-%]** | **Y**_{**2**}**O**_{**3**} **[Gew.-%]** | **Sinteradditive gesamt [Gew.-%]** | **cBN [Gew.-%]** | **Dichte** | **Härte** | **Sinterverfahren** |
|---|---|---|---|---|---|---|---|
| V3. | 2,5 | 7,5 | 10,0 | 0 | 99,8 % | 1550 | Gasdruck |
| V4. | 2,5 | 7,5 | 10,0 | 0 | 100,0 % | 1700 | Kapsel-HIP |
| 1. | 2,5 | 7,5 | 10,0 | 10 | 100,0 % | 1900 | Kapsel-HIP |
| 2. | 2,5 | 5,0 | 7,5 | 10 | 100,0 % | 1910 | Kapsel-HIP |
| 3. | 2,5 | 2,5 | 5,0 | 10 | 100,0 % | 1930 | Kapsel-HIP |
| 4. | 1,5 | 2,5 | 4,0 | 10 | 100,0 % | 1960 | Kapsel-HIP |
| 5. | 1,0 | 2,0 | 3,0 | 10 | 100,0 % | 1960 | Kapsel-HIP |
| 6. | 1,0 | 1,5 | 2,5 | 10 | 100,0 % | 1980 | Kapsel-HIP |
| 7. | 2,5 | 5,0 | 7,5 | 5 | 100,0 % | 1830 | Kapsel-HIP |
| 8. | 1,5 | 2,5 | 4,0 | 5 | 100,0 % | 1870 | Kapsel-HIP |

## Patentansprüche

1. Verbundwerkstoff enthaltend Siliziumnitrid und kubisches Bornitrid, dadurch gekennzeichnet, daß er bis zu 50 Gew.-% kubisches Bornitrid und bis zu 10 Vol.-%, vorzugsweise 1,3 bis 4 Vol.-% mindestens eines Sinterhilfsmittels enthält und daß er eine theoretische Dichte von mehr als 97 % aufweist.

2. Verbundwerkstoff gemäß Anspruch 1, dadurch gekennzeichnet, daß er 0,5 bis 15 Gew.-% kubisches Bornitrid enthält.

3. Verbundwerkstoff gemäß einem der Ansprüche 1 oder 2, dadurch gekennzeichnet, daß er als Sinterhilfsmittel mindestens ein hochschmelzendes Oxid der Seltenerdmetalle enthält.

4. Verbundwerkstoff gemäß einem der Ansprüche 1 bis 3, dadurch gekennzeichnet, daß als Seltenerdmetall ein Element der Lanthanoidengruppe, Scandium und/oder Yttrium eingesetzt wird.

5. Verbundwerkstoff gemäß einem der Ansprüche 1 bis 4, dadurch gekennzeichnet, daß als Sinterhilfsmittel Er₂O₃, Gd₂O₃, Nd₂O₃, Sc₂O₃, Sm₂O₃, Y₂O₃ und/oder Yb₂O₃, vorzugsweise eine Mischung von mindestens zwei dieser Oxide eingesetzt wird.

6. Verbundwerkstoff gemäß einem der Ansprüche 1 bis 5, dadurch gekennzeichnet, daß als Sinterhilfsmittel binäre Mischungen aus Al₂O₃ und Y₂O₃, Yb₂O₃ und Y₂O₃ oder ternäre Mischungen aus Yb₂O₃, Y₂O₃ und Er₂O₃ eingesetzt werden.

7. Verbundwerkstoff gemäß einem der Ansprüche 1 bis 6, dadurch gekennzeichnet, daß als Sinterhilfsmittel zusätzlich zu den in den Ansprüchen 1 bis 6 genannten Sinterhilfsmitteln Fe₂O₃ und/oder HfO₂ eingesetzt wird.

8. Verbundwerkstoff gemäß Anspruch 7, dadurch gekennzeichnet, daß bis zu 1 Gew.-% Fe₂O₃ und/oder bis zu 5 Gew.-% HfO₂ eingesetzt wird.

9. Verbundwerkstoff gemäß einem der Ansprüche 1 bis 8, dadurch gekennzeichnet, daß als Siliziumnitrid β-Si₃N₄ eingesetzt wird.

10. Verfahren zur Herstellung eines Verbundwerkstoffes gemäß einem der Ansprüche 1 bis 9, dadurch gekennzeichnet, daß die Rohstoffe vermischt, dem Mahlschlicker organische Verflüssiger zugegeben werden, in einer Kugelmühle die spezifische Oberfläche erhöht wird, der Mahlschlicker nach Zugabe organischer Bindemittel getrocknet, granuliert, gesiebt und trocken zu Grünteilen verpreßt wird und mit dem Kapsel-Hip-Prozeß bis zu einer Enddichte, die bezogen auf die theoretische Dichte größer als 97 % ist, verdichtet wird.

11. Verfahren zur Herstellung eines Verbundwerkstoffes gemäß einem der Ansprüche 1 bis 9, dadurch gekennzeichnet, daß beim Kapsel-HIP-Prozeß als Glaswerkstoff zum Einkapseln eine pulverförmige Mischung aus Vycor-Glas (96,7 % SiO₂, 2,9 % Br₂O₃ und 0,4 % Al₂O₃), Pyrex-Glas (80 % SiO₂, 12 % B₂O₃, 3 % Al₂O₃, 4 % Na₂O, 0,5 % K₂O, 0,3 % CaO), Borsilikatglas mit 2 bis 6 % B₂O₃, < 1 % Na₂O und 2 % Al₂O₃, Gläser, die im Hinblick auf die Benetzung des Siliziumnitrids durch den Gehalt an Na₂O und K₂O optimiert sind und/oder Gläser, die im Hinblick auf den thermischen Ausdehnungskoeffizienten an Siliziumnitrid durch Zugabe von Al₂O₃-Pulver angepaßt sind eingesetzt werden.

12. Verwendung der Siliziumnitridkeramik gemäß einem der Ansprüche 1 bis 9 als Schneidkeramik.

13. Verwendung der Siliziumnitridkeramik gemäß einem der Ansprüche 1 bis 9 als Substrat für Beschichtungen.
